# EUROPEAN PATENT APPLICATION

(11) **EP 4 258 077 A1**
(43) Date of publication of application: **11.10.2023**
(21) Application number: 21900411.6
(22) Date of filing: 17.11.2021
(51) Int. Cl.: G05D 1/02

(54) **DEVICE AND METHOD FOR SIMULATING MOBILE ROBOT AT WORK SITE**

(30) Priority: 01.12.2020 SG 10202011988T
(71) Applicant: OMRON Corporation, Kyoto 600-8530 (JP)
(72) Inventor: VANGAL RAMAMURTHY, Swaminathan, Singapore 119968 (SG); THIAGARAJAH, Ganaventhan, Singapore 119968 (SG); NAGARAJAN, Raja, Singapore 119968 (SG); GOH, Zachariah Shengxiong, Singapore 119968 (SG)
(74) Representative: HGF
(86) International application number: PCT/JP2021/042214
(87) International publication number: WO 2022/118656

(57) **Abstract**

An apparatus and method for simulating a mobile robot at a work site, wherein the apparatus comprises: one or more sensors for mapping an environment of a work site; and a processor configured to execute instructions to operate the apparatus to: display images of the environment captured by the one or more sensors on a display; perform mapping of the environment based on inputs of the one or more sensors; detect one or more objects in the environment; generate graphics of a virtual mobile robot for displaying in the environment displayed on the display; and receive user input to control movements of the virtual mobile robot in the displayed environment, wherein the virtual mobile robot is configured to move in the displayed environment to overcome the one or more objects detected in the environment.

## Description

### TECHNICAL FIELD

The present invention relates to an apparatus and method for simulating a mobile robot at a work site, in particular, to simulate the mobile robot and/or gather information required for planning the deployment of one or more mobile robots at the work site.

### BACKGROUND ART

In a work site such as a production line or manufacturing plant, autonomous mobile robots can be used to perform tasks like transportation of objects/goods, perform production jobs, and/or inspection of environment. They are capable of human interaction such as to take in instructions to move between instructed locations.

Currently, it is time consuming and challenging to plan for the deployment of these autonomous mobile robots for a work site. A lot of information of the work site has to be gathered manually to determine the best way to deploy the robots. At the planning stage, it is hard for users to visualize the scenario after the robots are deployed. Furthermore, after the robots are deployed, it can also be difficult for users to plan for the addition of more robots.

Moreover, it is not always practical to arrange for demonstration or testing of the robots at the work site, as each robot can be rather bulky and difficult to transport. If the production premise is located at a remote location, and sending robots on-site for demonstration or testing is difficult, costly, or not possible.

### SUMMARY OF THE INVENTION

According to an example of the present disclosure, there are provided an apparatus and a method for simulating a mobile robot at a work site, as claimed in the independent claims.

There is also provided a system for simulating a mobile robot at a work site in a system claim. Some optional features are defined in the dependent claims.

### BRIEF DESCRIPTION OF THE DRAWINGS

FIG. 1 shows a system architecture comprising an apparatus according to an example of the present disclosure.
FIG. 2 shows a flowchart of a method according to an example of the present disclosure.
FIG. 3 shows a screen view of a graphical user interface illustrating an initialization step to be taken prior to the simulation of a virtual mobile robot.
FIG. 4 shows a cropped screen view of a graphical user interface with a virtual mobile robot placed in it, and the virtual mobile robot is highlighted.
FIG. 5 shows a screen view of a graphical user interface with a virtual mobile robot placed in it.
FIG. 6 and 7 show examples of a list of payloads containing user selectable payloads for mounting to a virtual mobile robot of an example of the present disclosure.
FIG. 8 to 11 show four screen views respectively of a graphical user interface according to an example of the present disclosure, wherein the four screen views shows virtual mobile robots mounted with different payloads.
FIG. 12 shows a virtual mobile robot with a specific payload mounted on it, and the animation of the specific payload is switched off.
FIG. 13 shows a virtual mobile robot of FIG. 12 with the animation of the specific payload switched on.
FIG. 14 illustrates a map conversion process from a three-dimensional (3D) map to a two-dimensional (2D) map.
FIG. 15 illustrates use of a 5G network in an example of the present disclosure.

### DETAILED DESCRIPTION

In a production line or manufacturing plant, autonomous mobile robots may be deployed to facilitate the production or manufacturing process. Each mobile robot may be mounted with machinery or equipment to transform the mobile robot into a mobile station for performing tasks using the mounted machinery or equipment. A term "payload" is used in the present disclosure to refer to the mounted machinery or equipment.

It is time consuming and challenging to plan for the deployment of these autonomous mobile robots for a work site. For instance, it can take 6 to 12 months for the planning and deployment. A lot of information of the work site has to be gathered to determine the best way to deploy the robots. For example, floor plans, images of the site, equipment location, etc. At the planning stage, it is hard for users to visualize the scenario after the robots are deployed. Even after the robots are deployed, it is difficult for users to plan for the addition of more robots.

Examples of the present disclosure can provide an apparatus and a method that are capable of simplifying and reducing the amount of time for the planning and deployment of the mobile robots to as short as a few weeks. Specifically, the apparatus and method provide a simple and convenient solution to gather information from a work site for the planning. The apparatus and method also provides a demonstration tool for demonstrating the capabilities of the mobile robots and/or simulating a scenario after deployment of the mobile robots to potential users.

The apparatus has to be present at the work site to gather information. In one example of the present disclosure, the apparatus can be a mobile device that can be hand-held such as a smartphone, a tablet device, a laptop, and the like. In another example, the apparatus can be a real mobile robot (a real robot present at the work site) having a mobile base that is movable, or the apparatus can be a movable cart that can be pushed by a user. The mobile base may have wheels and/or tracks for moving the mobile robot. The mobile robot can be configured to move around the work site on its own or it can be remotely controlled by a user to move around the work site. In the case of the movable cart, it can have a mobile base with wheels and/or tracks as well, and be pushed around by the user.

The apparatus comprises one or more sensors to be used for navigation/area mapping purposes and may be or include one or more cameras for capturing images (photograph or video). The term "mapping" means scanning or sensing the environment of the work site for purposes of creating a map for the environment of the work site. Mapping can refer to a process to create parts of the map or create the entire map. Mapping inputs refer to data for full or partial map creation. Such mapping inputs can be obtained from the one or more sensors. The one or more sensors may also be or include laser sensors (e.g. for LiDAR system), infrared sensors, ultrasonic sensors and the like. LiDAR relates to a technology for measuring distances (ranging) by illuminating a target with laser light and measuring the reflection with a sensor. Differences in laser return times and wavelengths can then be used to make digital three-dimensional (3D) representations of the target.

The apparatus can be configured to have Simultaneous Localization and Mapping (SLAM) capability, which can be implemented using, for instance, an Adaptive Monte Carlo Localization (AMCL) algorithm. AMCL algorithm relates to a probabilistic localization system for an object (known as AMCL node) navigating in two-dimensional (2D) i.e. navigate in a 2D map. An AMCL node can be configured to work with laser scans and laser maps provided through LiDAR, but it could also be extended to work with other sensor data, such as a sonar or stereo and the like. In the case that SLAM and AMCL are involved, a 2D map of the environment, typically a top view of the environment, has to be created.

The apparatus is configured to operate or run software, which can be an application, such as a mobile application of a mobile operating system (e.g. Google's Android, iPhone Operating System, etc.), or an application to be run on an operating system (e.g. Windows, MacOS, etc.) of a portable computer (e.g. notebook, laptop etc.). The software works with the one or more sensors for navigation in/area mapping of the environment of the work site. The software also helps a user to obtain data (e.g. cycle time, utilization etc.) other than those relating to navigation/area mapping, which will be discussed in more detail later. The software is configured to create a virtual mobile robot for display, and simulate the movements and/or operation of the created virtual mobile robot in the environment of the work site. The software can provide a graphical user interface to facilitate a user to configure and/or use the software.

The apparatus can have a display, which can be an LCD, LED, or OLED screen, and the like. The display is used for showing the graphical user interface of the software. The apparatus may be configured to have the environment of the work site displayed as a background on the display and have the created virtual mobile robot overlaid or augmented in the displayed environment. The environment may be captured by one or more cameras. Alternatively, the one or more sensors can be other types of sensors like laser sensors, infrared sensors, ultrasonic sensors, and the like, which can map out the environment and provide data for rendering graphics representing the environment to be displayed on the display. The environment shown as background can be an entirely virtual environment that is created based on the mapping inputs (e.g. the virtual environment can simulate a fully furnished environment), or a partially virtual environment with overlays or is augmented over what a camera captures (e.g. only walls and/or other objects that can obstruct the virtual mobile robot are highlighted, ground is deliberately provided with a mesh, etc.). The appearance of the virtual graphical content and/or graphical overlays may be customizable.

A user can provide inputs to control the behaviour of the virtual mobile robot. Such user inputs can be used to program an actual mobile robot to be deployed. In the case of remote control of a real mobile robot used to gather information at the work site, a display can be provided at where the user is remotely located to provide the user with the graphical user interface to operate the virtual mobile robot for simulating the virtual mobile robot and/or to gather information from the simulation. The graphics of the virtual mobile robot can be in any form as long as a movable object is shown. For instance, it may be a simple sphere or box object with no elaborate designs. In another example, the graphics may be a realistic representation of a real mobile robot.

In one example, the apparatus is configured to perform jobs a) to e) as follows:
a) Produce a map of the environment of the work site based on inputs from the one or more sensors. The map can be a two-dimensional (2D) and/or three-dimensional (3D) map. All references to "the map" in the present disclosure refers to this map. The 2D map can be a top view of the environment. In one example, a 3D map can be first created and then converted into the 2D map. The map can be generated by first moving the apparatus around the environment of the work site to scan and map the environment. After the map is generated, localization data, global path data, object data relating to obstacles that include static objects and/or dynamic objects, and/or other information can be collected. Examples of dynamic objects can include human, machine, and/or random things lying on the floor. Alternatively, it is also possible to have the map generated as the apparatus is moved around the environment of the work site, and concurrently collect localization data, global path data, object data relating to obstacles that include static objects and/or dynamic objects, and/or other information.
b) Obtain localization data i.e. data relating to positioning of the virtual mobile robot in the produced map. The apparatus that is present at the environment of the work site can be deemed as the hardware of the virtual mobile robot. Hence, when the apparatus tracks its location, the location of the apparatus can be used to track the location of the virtual mobile robot. Localization is the way in which the apparatus tracks its location on the produced map. It is a process the apparatus uses to estimate its position in the environment based on data collected from the one or more sensors. For example, there can be 2 types of localization. Laser localization uses data from a laser sensor (e.g. LiDAR scanner) of the apparatus in conjunction with the map to calculate its position. This can be set as a default way the apparatus keeps track of its position in the environment (or operating space). Optionally, the apparatus can use lights to track its position in the environment. In this case, a light source has to be provided. This may be a torchlight function in the case that the apparatus is a smartphone or other mobile device, and/or mounted headlights in the case that the apparatus is a real mobile robot controlled by a user or a moveable cart that is pushable by a user. The light localization process can be used in dynamic environments, wherein objects move frequently for the apparatus to localize based on the past positions of the objects and/or the apparatus. During localization, the map is compared with data collected from the one or more sensors to correct the position of the virtual mobile robot. With this information, the apparatus can track the position of the virtual mobile robot on the map.
c) Obtain global path data, for instance, one or more routes or paths auto-computed by the apparatus for the virtual mobile robot. These auto-computed paths can serve as instructions or guidance to a real mobile robot that may be deployed at the work site. A path planning scheme called cost based path planning can be used for the automatic computation of paths. In this scheme, a virtual mobile robot instructed to proceed to a goal (e.g. a waypoint set by a user in the software) searches the map for the most efficient path from a current location of the virtual mobile robot to reach the goal, based on information about the map. This path is called a global path and is the optimal path between two points. The virtual mobile robot follows this path to the goal and in the process, avoids any unmapped obstacle (i.e. object blocking movement of the virtual mobile robot that is not recorded in the map). If the apparatus detects unmapped objects, it alters the local path of the virtual mobile robot to avoid them. If the virtual mobile robot is unable to proceed along the global path, the apparatus can re-plan a new global path for the virtual mobile robot based on information about the map.
d) Obtain object data relating to obstacles that include static objects and/or dynamic objects to the virtual mobile and record their movements and positions relative to the map. Such objects are detected using the one or more sensors.
e) Optionally, gather other information relating to improvement of work efficiency such as cycle time and utilization data. Cycle time refers to the time in which the virtual mobile robot takes to complete a work cycle comprising of tasks assigned to the virtual mobile robot to be virtually performed. Utilization data refers to the extent of usage of the virtual mobile robot. Another example can be traffic condition for movement at the work site.

For example, the apparatus may be configured to receive the following 6 types of inputs (i) to (vi) from a user.
(i) The user can input waypoints in specific points or areas in the environment displayed on the display as the apparatus is moved around. For example, in the case the display is a touchscreen display, the user can select a point or area in the environment displayed on the display and set it as a waypoint. Alternatively, the waypoint can be set by selecting points or areas in the created map via the graphical user interface. Each waypoint may be annotated with comments and/or goals may be set at these waypoints. For instance, a waypoint can be set as a point or area to perform specific actions, e.g. a recharge area to simulate recharging of a rechargeable battery of a virtual mobile robot, an area for changing payload mounted on a virtual mobile robot, a repair area for a virtual mobile robot, an area to perform a specific production/warehousing task by a virtual mobile robot, etc. The waypoints can also function as a guide for navigating the path of the virtual mobile robot that is simulated by the apparatus. Numbers can be provided to the waypoints to indicate a priority order in which the virtual mobile robot should move between the waypoints.
(ii) The user can mark out one or more zones or areas that the virtual mobile robot is allowed to enter and/or zones or areas that the virtual mobile robot is not allowed to enter in the environment. If certain zones are preferred for entry or not entirely disallowed, resistance or preference level may be assigned to these marked out zones or areas for path planning purposes. More details on resistance and preference are provided below.
(iii) The user can input path planning parameters via the graphical user interface of the software run by the apparatus. Path planning parameters control how the virtual mobile robot moves through the environment. An non-exhaustive list of examples of path planning parameters is as follows:
   1) The virtual mobile robot's maximum traveling and rotating speed.
   2) Turning radius of the virtual mobile robot.
   3) Grid resolution of a Path Planning Grid. The path planning grid can be related to the path planning scheme called the Cost Based Path Planning, which is discussed above. For example, conceptually, the 'cost-based' aspect or grid resolution of this path planning scheme breaks the 2D map (top view) that is produced into discrete 100 mm squares (typically sufficient), called the path planning grid, and assigns a cost to each square. Free (empty) squares (those not close to any obstacles) may have a cost of 0.1. The cost for squares containing walls and other fixed objects is infinite, which means the virtual mobile robot will never enter these squares because the cost is far too high.
   4) Fast and slow speeds of the virtual mobile robot. For example, a user can set the movement speed of the virtual mobile robot at specific waypoint, and/or point or area in the map. Some areas may require the virtual mobile robot to slow down for traffic control purposes, for safety reasons, or for any other purpose.
   5) Padding and clearances (at fast and slow speeds) of the virtual mobile robot. This refers to how much clearance or distance the virtual mobile robot needs to have from objects in the environment.
   6) Rotational speed of a virtual mobile robot at a specific waypoint, and/or point or area in the map.
   7) Acceleration/deceleration of the virtual mobile robot at selected waypoint, and/or point or area in the map, or the acceleration/deceleration as a user drives the virtual mobile robot around the environment.
   8) The amount of resistance for resisted sectors and resisted lines. Sectors are the zones or areas, which a user may set in the map, for instance, by selecting grid squares. Lines refer to boundary lines set by a user in the map. The term "resistance" herein determines the cost of crossing a resisted sector and/or line set in the map. It is a value defining how much the virtual mobile robot will resist driving through a particular sector and/or cross a line, and find an alternative path. A cost of driving through a resisted sector or line can be multiplied by its resistance value. For example, a normal area or sector can be given a cost value of 1 and setting the resistance value to 1 will turn off the resistance behavior.
   9) Preferred lines for the virtual mobile robot to cross or follow, preferred sectors for the virtual mobile to enter, and/or preferred directions for the virtual mobile robot to move. For example, the same resistance value may be used to indicate level of preference, or another preference value may be used to indicate the level of preference.
(iv) The user can control/adjust the localization parameters of the one or more sensors according to user requirements. Note that although the unit millimeters (mm) is indicated below, other measurement units may also be similarly applied.

When laser localization is used, examples of some localization parameters may be as follows.
- A flag to vary the number of samples based on a localization score. When enabled, number of samples may be lowered when the virtual mobile robot is moving and the localization score is high. This reduces Central Processing Unit (CPU) or computational demand at the apparatus.
- A parameter to adjust separation (in degrees) required between laser settings used for localization. The parameter may be set to discard readings that are too close to each other and this reduces CPU or computational demand at the apparatus.
- Grid Resolution (in mm) of map grids created during the laser localization. This relates to scan resolution. Decreasing this value increases localization accuracy, but increases demand on memory usage (e.g. RAM usage) at the apparatus.
- Millimeters of linear error per linear millimeter of travel. This refers to allowed percentage error (in mm) of the apparatus's linear odometry readings. If set too high, sample poses will be too spread out for the apparatus to determine its location. If set too low, the apparatus might not be able to localize.
- Degrees of error per degrees of rotation of the apparatus. This refers to allowed percentage error (in degrees) of the apparatus's rotational odometry readings. If set too high, sample poses will be too spread out for the apparatus to determine its location. If set too low, the apparatus might not be able to localize.
- Degrees of error per linear mm traveled. This refers to allowed error (in degrees) of the robot's rotation per one mm of linear travel. If set too high, sample poses too spread out for the apparatus to determine its location. If set too low, the apparatus might not be able to localize.
- Number of pose samples the apparatus uses for localization. This relates to scan resolution. Increasing this value increases localization computations. If too low, the apparatus fails to localize.
- Distance the apparatus travels (in mm) before localizing. This relates to frequency of localization of the apparatus. This parameter can be adjusted to help reduce CPU or computational demand at the apparatus. The apparatus only localizes when it travels beyond the listed distance value.
- Angle (in degrees) the apparatus turns before triggering localization. This relates to frequency of localization of the apparatus. This parameter can be adjusted to help reduce CPU or computational demand at the apparatus. The apparatus only localizes when it rotates beyond the listed angular value.

When light localization is used, examples of some localization parameters may be as follows. The light source mentioned below refers to one that is mounted on the apparatus or separately provided to work with the apparatus.
- Minimum height (in mm) of the light source above the ground. This value is approximate and should be lower than the real value. It is used to establish a valid range and eliminate false positives.
- Maximum height (in mm) of the light source above the ground. This value is approximate and should be higher than the real value. It is used to establish a valid range and eliminate false positives.
- Minimum length (in mm) of the light source. This value is approximate and should be slightly lower than the real value.
- Maximum length (in mm) of the light source. This value is approximate and should be slightly higher than the real value.

(v) The user can configure the virtual mobile robots to perform specific tasks. The time duration for the tasks may also be set. Optionally, a simulation (e.g. in the form of an animated video) can be provided to show the performance of the tasks by the virtual mobile robots. In an example, a virtual mobile robot can be configured to move and operate in the environment as if it is a real mobile robot once the following is done:
- the map of the environment is generated;
- the waypoints specific to a virtual mobile robot are set in the map by a user;
- how the virtual mobile robot is to move between the waypoints is set; and
- the tasks or actions to be performed at the waypoints in the work site are set.
As the virtual mobile robot is operating, work efficiency related information of the virtual mobile robot such as the cycle time and the utilization data can be calculated.

(vi) The user can select a payload from a list of different payloads to be mounted to. Users can also input CAD Models of a customised payload that they would like to have, and/or CAD Models of a customised mobile robot that the users required.

The software of the apparatus can be configured to include more than one virtual mobile robots, and/or one or more objects for simulating traffic conditions in the case that more than one virtual mobile robots are deployed. Each virtual mobile robot can be configured according to what is described above for a virtual mobile robot. The one or more objects created may be static objects such as furniture, building structure, and/or equipment placed at a location. The one or more objects created may also be dynamic objects such as people, moving equipment, and/or other moving objects. Traffic data can be gathered from the simulation for traffic control management purposes. The software can also be configured to enable a user to view the simulation of the one or more virtual mobile robots and any created object in the environment.

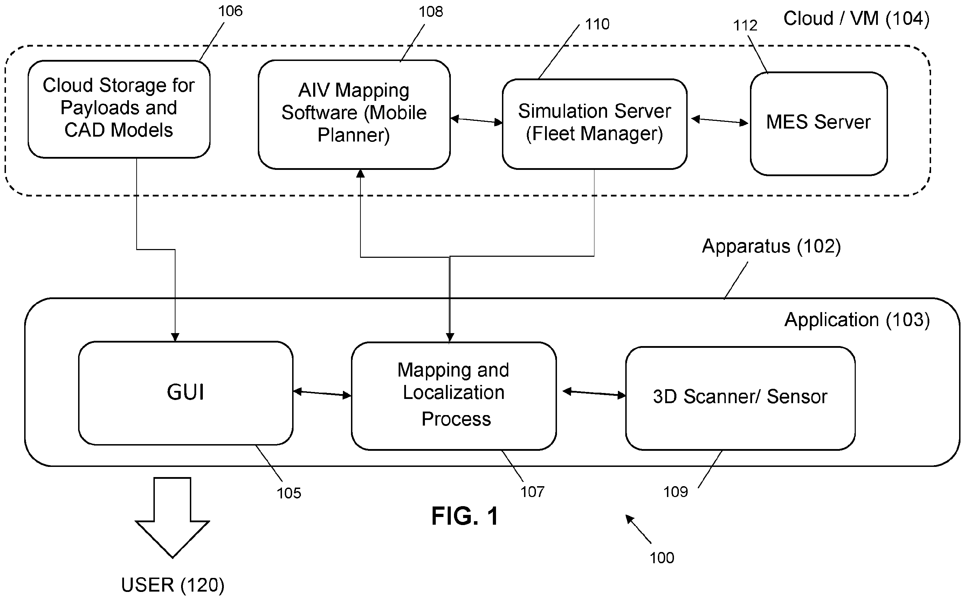

An example of a system architecture of a system 100 comprising the apparatus as described above is illustrated in FIG. 1. The apparatus is given a reference numeral of 102 in FIG. 1. The apparatus 102 is present in the environment of the work site to gather information for planning the deployment of a mobile robot at the work site, and to run a simulation of the movements and operations of a virtual mobile robot working at the work site. Specifically, the apparatus 102 performs the jobs a) to e) described earlier.

In the present example, the apparatus 102 is a smartphone with a touchscreen display, and is configured to run a mobile application 103. The apparatus 102 has one or more sensors 109 (3D Scanner/Sensor), including sensors for a LiDAR system, for performing a mapping and localization process 107 at the environment of the work site. The one or more sensors 109 also includes a camera. The apparatus 102 provides a graphical user interface 105 (GUI) for a user 120 to view the environment captured by the camera as a background, and to view the virtual mobile robot that is created by the application 103 and overlaid or augmented on the background. In addition, the GUI 105 provides features for the user 120 to:
1) control the movement of the virtual mobile robot, which can be done by providing, for instance, a virtual movement pad or joystick that is operable by touch on the touchscreen display;
2) select a payload from a list of payloads to be mounted to the virtual mobile robot;
3) receive the 6 types of user inputs (i) to (vi) described earlier;
4) customise the virtual mobile robot, any payload, any object to be displayed in the environment, and/or the environment that are displayed;
5) add any object to be displayed in the environment and be considered during localization, during auto-computation of paths and/or during object detection; and
6) upload CAD models of user customised payloads, user customised virtual mobile robot, and/or any user created object that can be displayed in the environment for storage.

The apparatus 102 works with a cloud system 104 that may use virtual machine (VM) technology. For instance, cloud services can use virtual machines to provide virtual application resources to multiple users at once. A Virtual Machine (VM) can be a computing resource that uses software instead of a physical computer to run programs and deploy applications. One or more virtual "guest or client" machines can run on a physical "host" machine. Each virtual machine may run its own operating system and function separately from the other VMs, even when they are all running on the same host.

Specifically, the apparatus 102 works with a plurality of servers in the cloud system 104, which is described as follows. It is appreciated that in another example, more than one servers may handle the job scope of each of the servers described below.

In the present example, the cloud system 104 includes a storage server 106 for managing cloud storage of:
1) data of payloads (e.g. images, text, audio, etc.) that are user selectable at the apparatus 102 to be mounted on the virtual mobile robot as described earlier, and
2) data of CAD Models of the payloads, user customised payloads, the virtual mobile robot, user customised virtual mobile robot, and/or any created object that can be displayed in the environment.

The apparatus 102 downloads to or upload from the server 106 the above-mentioned data as required during operation. Alternatively, in another example, such data may be stored locally in local memory accessible to the apparatus 102. The server 106 can also be configured to manage user accounts for a plurality of users of apparatuses like the apparatus 102, and conduct authentication for each user logged in to use the application 103.

The cloud system 104 further includes a planning server 108 for running an autonomous intelligent vehicle (AIV) mapping software (also known as Mobile Planner), which amongst other things, functions as a control center for creating a map of the work site from mapping inputs provided by the apparatus 102 and managing AIV configurations for the virtual mobile robot. The planning server 108 can support the mapping and configurations for a plurality of apparatuses like the apparatus 102, and also real mobile robots. AIV refers to the virtual mobile robot created at the apparatus 102. In the present example, the Mobile Planner is a server-based application. Hence, the mapping process to create the map is performed at the server 108 instead of the apparatus 102. The apparatus 102 just needs to provide the mapping inputs to the server 108 and the server 108 will return the created map. In another example, it is possible that the Mobile Planner is a local application run at the apparatus 102.

The cloud system 104 also includes a simulation server 110 for running software (also known as Fleet Manager) for performing the required processing to simulate the operation of the virtual mobile robot in the environment of the work site. The Fleet Manager can control real and/or virtual mobile robots in the environment of the work site. The Fleet Manager provides a centralized configuration platform for configuring a plurality of real and/or virtual mobile robots in the environment. It also provides a central map management platform for the plurality of real and/or virtual mobile robots. The user configurations made centrally using the Fleet Manager and the map information collected centrally at the Fleet Manager can be automatically propagated to the plurality of real and/or virtual mobile robots. The Fleet Manager further manages job queuing, matching jobs to available real and/or virtual mobile robots, and the dispatching of the plurality of real and/or virtual mobile robots in the environment to perform assigned jobs. It also performs traffic management for the plurality of real and/or virtual mobile robots to prevent collision and/or to ensure that they move efficiently. Location and trajectory information of the real and/or virtual mobile robots are shared by the Fleet manager. The Fleet manager acts as a single-point of integration and communication for software clients, which can include a plurality of the same apparatus 102 and/or real mobile robots, and other automation equipment (excluding the real and/or virtual mobile robots) in the environment. In the present example, the Fleet Manager is a server-based application. In another example, it is possible that some or all the features of the Fleet Manager is provided as a local application run at the apparatus.

During simulation of the movement of a virtual mobile robot, if a user does not move the apparatus 102 along with the virtual mobile robot to perform localization to enable the virtual mobile robot to avoid (i.e. get around) dynamic objects, the simulation of the virtual mobile robot can still continue and be displayed based on real-time updates from the Fleet Manager. The Fleet manage can provide real-time updates on traffic conditions in the work site based on updates from other real and/or virtual mobile robots deployed in the work site. Dynamic objects detected by other real and/or virtual mobile robots can still be recorded and mapped for a virtual mobile robot even if the apparatus 102 is not around to perform localization for the virtual mobile robot.

The cloud system 104 includes a Manufacturing Execution Systems (MES) server 112 that can be used to drive manufacturing operations, by managing and reporting on plant activities, typically as events occur in real-time. The MES server 112 can be used in manufacturing to track and document the transformation of raw materials to finished goods. The MES server 112 can provide information that helps manufacturing decision makers understand how current conditions in a plant can be optimized to improve production output. The MES server 112 can work in real time to enable the control of multiple elements of a production process (e.g. inputs, personnel, machines and support services). The MES server 112 is used to manage, adjust, monitor, and control manufacturing processes performed by real and/or virtual equipment/machinery in the environment, and/or by real and/or virtual mobile robots in the environment.

The Mobile Planner, Fleet Manager and MES server 112 can communicate with one another to support a plurality of apparatuses like the apparatus 102.

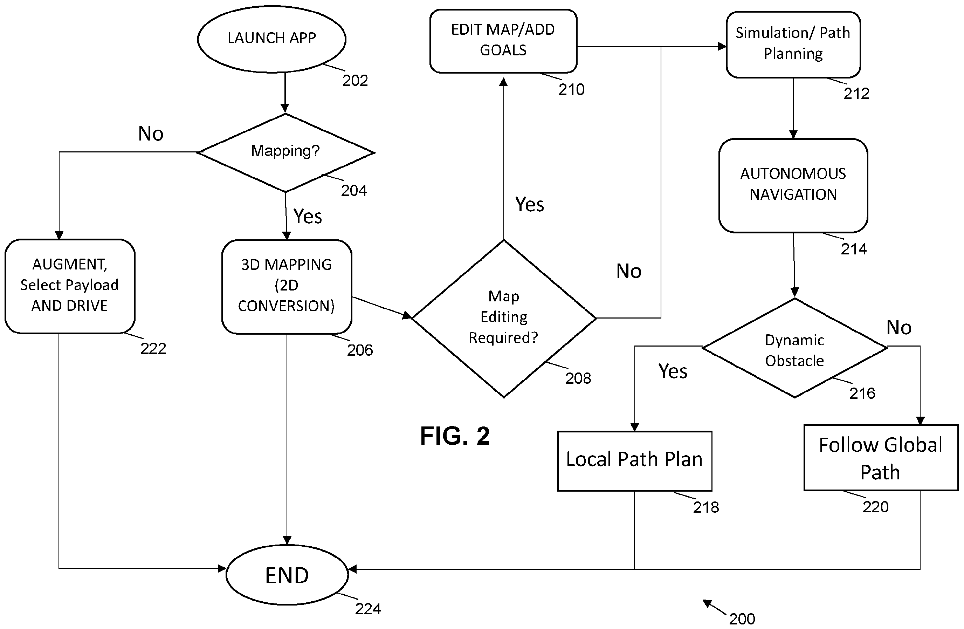

FIG. 2 shows a flowchart of an example of the method performed by the apparatus 102 of FIG. 1, which is a smartphone with a camera and a LiDAR system, to gather information of a work site. The method also provides a simulation of the movement and operation of a virtual mobile robot. A user launches the mobile application 103 of FIG. 1 of the apparatus 102 at a step 202. Prior to launch, the user may be required to login to the application 103 and be successfully authenticated by a server in communication with the application before access is given to use the application 103. A menu may appear in the GUI 1 05 of FIG. 1 after launch to enable a user to select the functions to perform. One of the functions can be to conduct mapping to create a map of the work site.

Upon user selection to perform mapping or upon launch of the application 103, the application 103 checks whether mapping is required to create the map at a step 204. If a map of the work site already exists (e.g. uploaded or updated by the Mobile Planner or Fleet Manager, or previously created), then mapping is not required and the process goes to step 222. The apparatus 102 can communicate with the Mobile Planner or Fleet manager to obtain an existing map, or obtain an update for an existing map. In one example, the application 103 may prompt the user whether to proceed with re-mapping if a map already exists. If mapping is required, 3D mapping is initiated at a step 206. In this example, the user has to move the apparatus 102 around the work site to scan the environment to create a 3D map of the environment. During the mapping process, static/dynamic objects can be provided in the environment for the apparatus 102 to detect and record in the 3D map. The apparatus 102 obtains inputs from the one or more sensors 109 of FIG. 1 for the 3D mapping. After the 3D map is created, a 2D map (top view of the environment) is created from the 3D map. The method can end at a step 224 after the 2D map is created and the user selects to exit. Alternatively, the user can issue instructions via the GUI 1 05 to perform other functions such as to conduct a simulation of the virtual mobile robot (i.e. step 222) or to proceed with a step 208 to check with the user whether the user wishes to edit the 2D map.

If the user wishes to edit the 2D map (or the Fleet Manager has an update for the 2D map), the user (or the Fleet Manager) proceeds to edit the map at a step 210. Editing of the map can include adding waypoints and setting goals to be achieved at the waypoints, marking allowed/disallowed zones, editing path planning parameters, and setting tasks for the virtual mobile robot to be simulated according to (i), (ii), (iii) and (v) respectively of the 6 types of user inputs (i) to (vi) described earlier. Editing the map can also include adding static/dynamic objects at specific points and/or areas of the map.

If the map is already edited and the user does not wish to edit the 2D map at step 208, a simulation for automatic path planning by the virtual mobile robot can be performed at step 212. Step 212 can also proceed once the map editing is done at step 210.

At step 212, the virtual mobile robot is created to appear on the display of the apparatus 102 with images of the environment of the work site captured by the camera as a background. The virtual mobile robot is then set to navigate autonomously at a step 214 according to the goals/tasks that are set for the edited map. In this example, the user has to carry the apparatus and follow the virtual mobile robot, which is set to move automatically according to the set goals/tasks, to enable the apparatus 102 to perform localization for the virtual mobile robot. As the apparatus 102 is moved with the virtual mobile robot, it detects any unmapped or unrecorded dynamic object in the environment and have them recorded for the map at a step 216. On detection of such dynamic object, if it obstructs the movement of the virtual mobile robot, a local path plan is determined based on inputs of the one or more sensors during localization at a step 218 to guide the virtual mobile robot to move to avoid (i.e. get around) the dynamic object. For example, when an object is found in a global planned path (in front of the virtual mobile robot), the virtual robot will halt, alter its path and continue towards it next goal. If no such dynamic object is detected, the virtual mobile robot will follow a global path plan at a step 220 to get from one waypoint to another waypoint in an optimal manner without any concern for dynamic object. As the information of static objects would have been gathered during the map creation, it is understood that the movements of the virtual mobile robot during autonomous navigation would consider the presence of the static objects. A static object that is unmapped, newly included in the environment, and obstructs the movement of the virtual mobile robot, will be handled in the same manner as the detected dynamic object at step 216. The method ends at step 224 when the simulation is ended by a user or the set goals/tasks are accomplished by the virtual mobile robot.

In another example, the virtual mobile robot is configured to appear and navigate autonomously in the 2D map at the step 214 according to the goals/tasks that are set. The user does not carry the apparatus 102 and follow the virtual mobile robot around but watches on the display how the virtual mobile robot automatically conducts autonomous navigation in the captured environment as it goes around accomplishing the goals/tasks. In this case, as the virtual mobile robot moves in the environment, the virtual mobile robot will only detect dynamic objects that are already mapped or recorded in the map at step 216. The virtual mobile robot will simulate the localization process and move based on a local path plan at step 218 to overcome or get around the mapped dynamic object. For example, when an object is found in a global planned path (in front of the virtual mobile robot), the virtual robot will halt, alter its path and continue towards it next goal. If no such dynamic object is detected, the virtual mobile robot will follow a global path plan at step 220 to get from one waypoint to another waypoint in an optimal manner without any concern for dynamic object. As the information of static objects would have been gathered during the map creation, it is understood that the movements of the virtual mobile robot during autonomous navigation would consider the presence of the static objects. The method ends at step 224 when the simulation is ended by a user or the set goals/tasks are accomplished by the virtual mobile robot.

Back to step 204, the method goes from step 204 to step 222 when mapping is not required and the 2D map is already created, or upon user request. At step 222, instead of letting the virtual mobile robot navigate autonomously based on set goals/tasks (such as at step 214), the user manually controls and drives the virtual mobile robot around the work site using controls provided by the GUI 1 05, such as a virtual movement pad or joystick. The user can choose to move the apparatus 102 and follow the virtual mobile robot as it is driven. In this case, localization performed by the apparatus 102 for the virtual mobile robot can occur and the apparatus 102 can detect unmapped dynamic objects (that obstructs movement of the virtual mobile robot) to be mapped or recorded. If the user chooses not to move the apparatus 102 and follow the virtual mobile robot, then the virtual mobile robot will be driven in the environment as captured during the last map creation (or as last updated by the Fleet manager).

Optionally, the user may add a payload to be mounted to the virtual mobile robot at step 222 and watch a simulation of the virtual mobile robot together with the payload in operation. One or more on-screen button or a menu option can be provided to turn the audio of the virtual mobile robot and/or payload on or off. When audio is on, a realistic simulation including sound produced by the virtual mobile robot and/or payload is provided. There can also be an option to turn on or off or reduce any animation of the virtual mobile robot and/or the payload. In this case, the virtual mobile robot and/or the payload can become static images and/or animation of the virtual mobile robot and/or the payload can be minimized during operation.

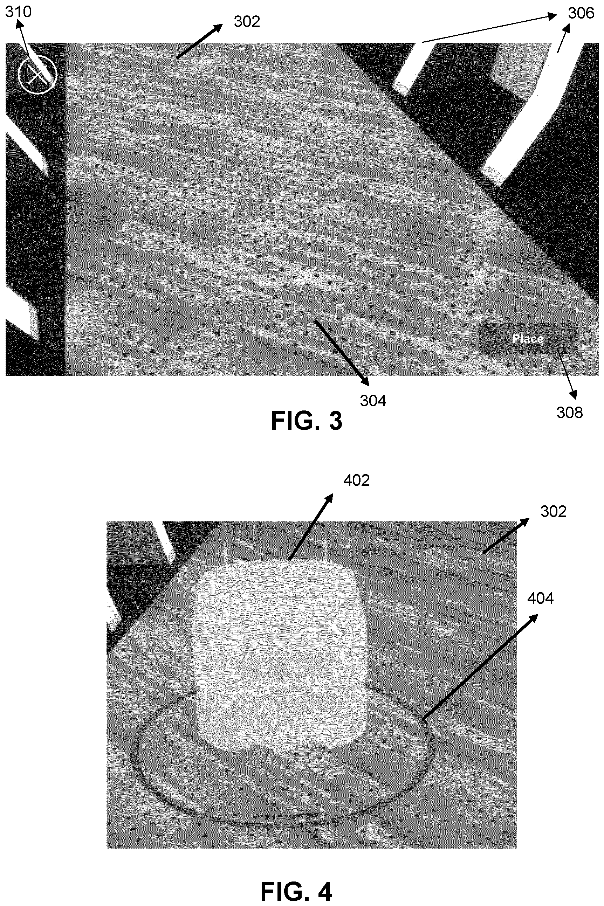

FIG. 3 illustrates the graphical user interface 105 of FIG. 1. FIG. 3 shows a displayed environment of the work site captured by the camera of the apparatus 102 of FIG. 1 with objects augmented over it. The description for FIG. 3 below makes reference to the elements in FIG. 1 and the steps in FIG. 2. Before the virtual mobile robot is displayed in a simulation, for instance, at step 212 or 222 of FIG. 2, a user may be required to initialize the augmentation or simulation process in an initialization step by directing the apparatus 102 to capture images of the ground 302 captured by the camera of the apparatus 102. The purpose for this initialization step can be to calibrate the one or more sensors 109 to get ready for localization, detect location of the apparatus 102 in a map of the environment if the map is already created, and let the user place the virtual mobile robot at a selected location.

A mesh 304, which is made up of a plurality of spots in the present example, is augmented on the ground 302 on successful detection of the ground 302 by the apparatus 102 with the help of the one or more sensors 109. Static objects such as walls 306 shown in FIG. 3 have graphics augmented over them in the displayed environment. These graphics highlight and make the walls 306 appear clearer on the display. The graphics may also serve as markers to guide the movements of the virtual mobile robot, for instance, to prevent the virtual mobile robot from collision or crossing a point, a line or an area that is marked out. A "place" button 308 is provided for a user to press to start a process to place a virtual mobile robot at a position on the ground 302 that the user selects. An "exit" button 310 with a cross is also provided for the user to select to exit the augmentation or simulation process. FIG. 4 is a cropped screen view showing graphics of a virtual mobile robot 402 being placed on the meshed ground 302 of FIG. 3. A ring 404 appears around the virtual mobile robot 402 on the ground 302. This ring 404 can be used to show a clearance or distance the virtual mobile robot 402 should maintain with an adjacent object near the virtual mobile robot 402. This clearance or distance is customizable. The ring 404 may also function like a cursor and appear when the virtual mobile robot 402 is selected by the user, and when the virtual mobile robot 402 is selected, the body of the virtual mobile robot 402 may be highlighted as shown in FIG. 4.

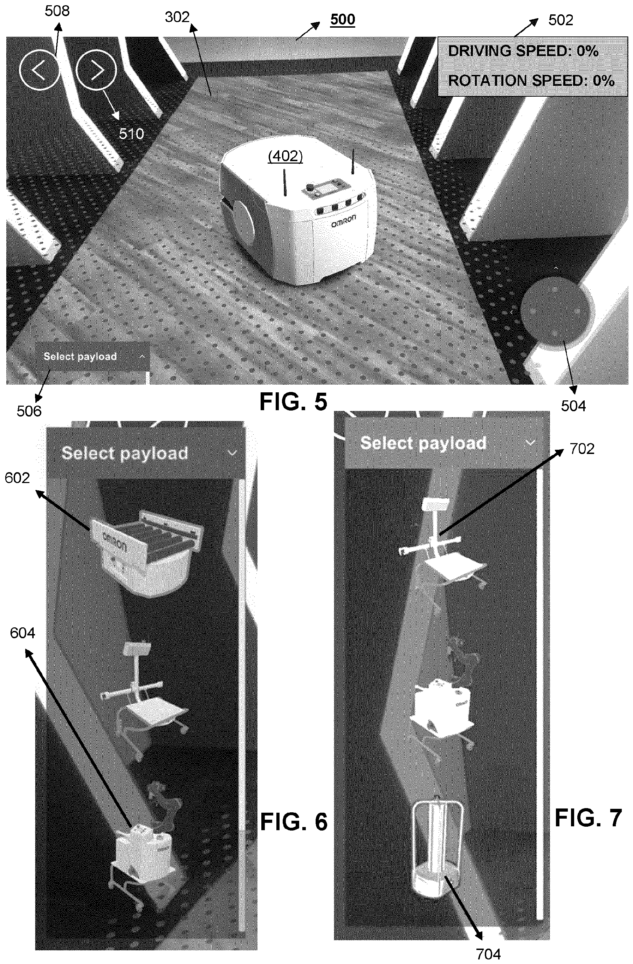

FIG. 5 shows an example of a screen view 500 (in landscape orientation) comprising the virtual mobile robot 402 of FIG. 4 after it is placed on the ground 302 at a user selected position. Such screen view 500 may appear at step 222 of FIG. 2. The screen view 500 comprises a back button 508 and a forward button 510 respectively for toggling between pages of the graphical user interface 105 of FIG. 1. There is also provided a "Select payload" button 506 for a user to click to show up a list of payloads for the user to select a payload from the list to mount on the virtual mobile robot 402, which is drawn to have no mounted payload in FIG. 5. On the top right hand corner of the screen view 500, there are parameters 502, specifically two of them, namely the driving speed of the virtual mobile robot 402 when it is driven by the user and the rotation speed of the virtual mobile robot 402 when it is controlled to rotate, are displayed. These parameters are just examples of what can be displayed for the user to monitor. Other parameters (e.g. the path planning parameters listed in (iii) of the 6 types of user inputs (i) to (vi) described earlier) can also be displayed. The screen view 500 also comprises a virtual joystick 504 operable to drive the virtual mobile robot 402 around the work site via touch on the touchscreen display of the apparatus 102 of FIG. 1. A user driving session of the virtual mobile robot 402 can be recorded as a video for future reference.

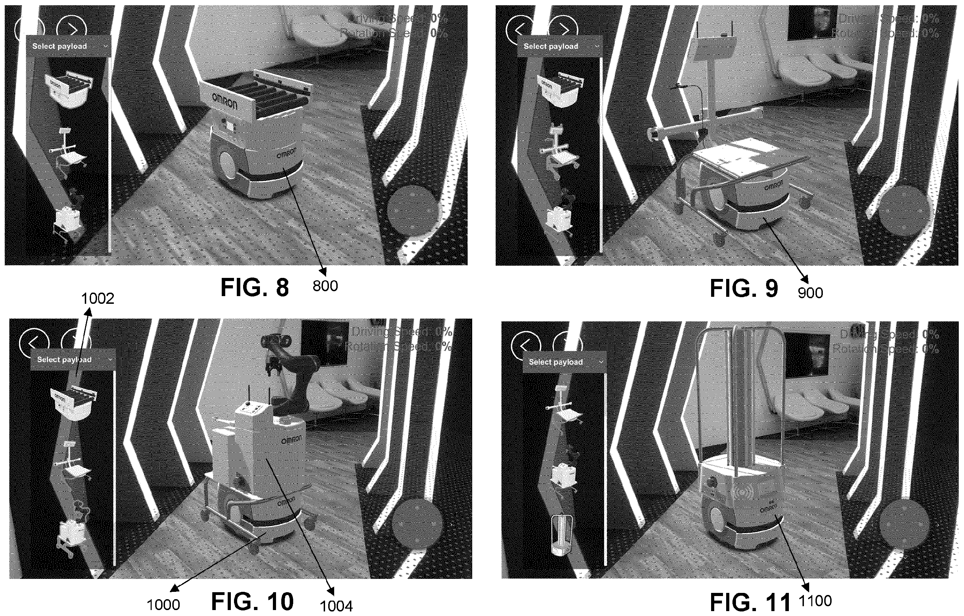

FIG. 6 and FIG. 7 show examples of the list of payloads described with reference to FIG. 5 for the user to select a payload to mount on the virtual mobile robot 402 of FIG. 5. Examples of payloads in the list can include a conveyor top 602 for conveying objects, a mobile manipulator (MoMa) 604 for moving objects, a cart robot top 702 designed to hold specific objects, and an ultraviolet (UVC) top 704. Furthermore, for the conveyor top 602, there can be present a virtual carton box, which is animated to move from the conveyor top 602 into a physical station (a real object in the environment) when the virtual mobile robot 402 has reached a goal i.e. a waypoint that is pre-set at the physical station by a user. The mobile manipulator 604 can have 6 or more axes of robot kinematics, and the mobile manipulator 604 comprises a virtual robot arm that is animated to perform a picking motion with a predetermined virtual gripper that is attached to the mobile manipulator 604. The design of the virtual gripper can be imported as a CAD model like the CAD models of all the payloads. FIG. 8 to 11 show four screen views of the graphical user interface 105 of FIG. 1. The four screen views of FIG. 8 to 11 show 4 virtual mobile robots 800, 900, 1000, and 1100 respectively. Each of them is mounted with a different payload. The virtual mobile robot 800 is mounted with a conveyor top. The virtual mobile robot 900 is mounted with a cart robot top. The virtual mobile robot 1000 is mounted with a user control panel top. The virtual mobile robot 1100 is mounted with a UVC top. Each of the four screen views show that a list of payloads 1002 in FIG. 10 for user selection of a payload to mount on the virtual mobile robot can be positioned in a window on one side of the graphical user interface 105.

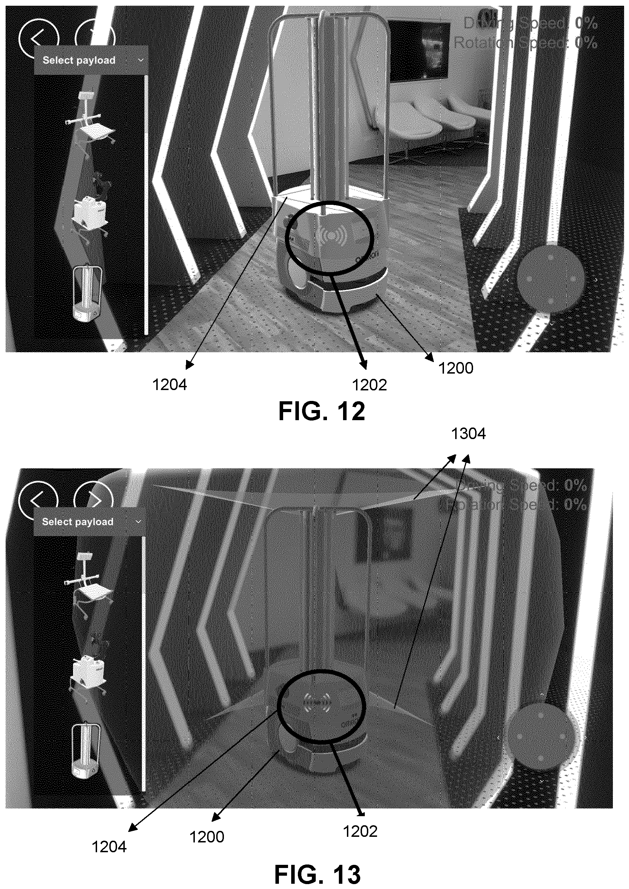

The intensity level of the UV light of the UVC top 704 of FIG. 7 may be adjusted. Furthermore, the UV light rays emitted by the UVC top 704 can also be turned on or off. FIG. 12 and 13 both show a screen view of a virtual mobile robot 1200 mounted with a UVC top 1204. FIG. 12 and 13 show a work volume simulation option or button 1202, which can turn on or off the emission of UV light rays 1304 from the UVC top 1204. In FIG. 12, the UV light rays are switched off and in FIG. 13, the UV light rays are switched on. FIG. 12 and 13 show that animation specific to each payload is provided to produce a realistic simulation. In the same manner, radiation or light emissions not visible to human such as infrared, laser beams, and/or other rays of electromagnetic waves can also be shown and/or animated. Navigation by a real or virtual mobile robot during the simulation can also take into considerations these radiation or light emissions.

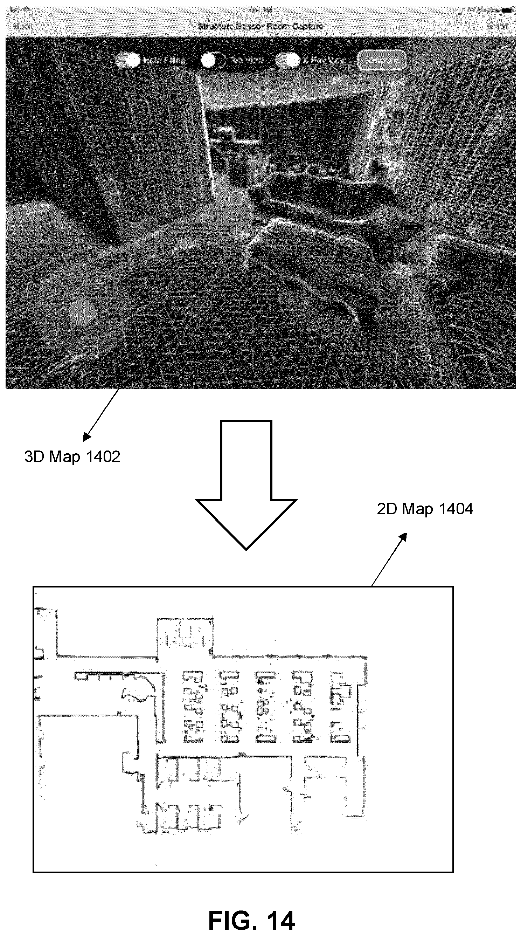

FIG. 14 illustrates an example of a 3D map 1402 of an environment of a work site that can be created by a LiDAR system of the apparatus 102 of FIG. 1 during the mapping process and an example of a 2D map 1404 (e.g. a file in .dxf format) of the environment of the work site that can be obtained by conversion from the 3D map 1402.

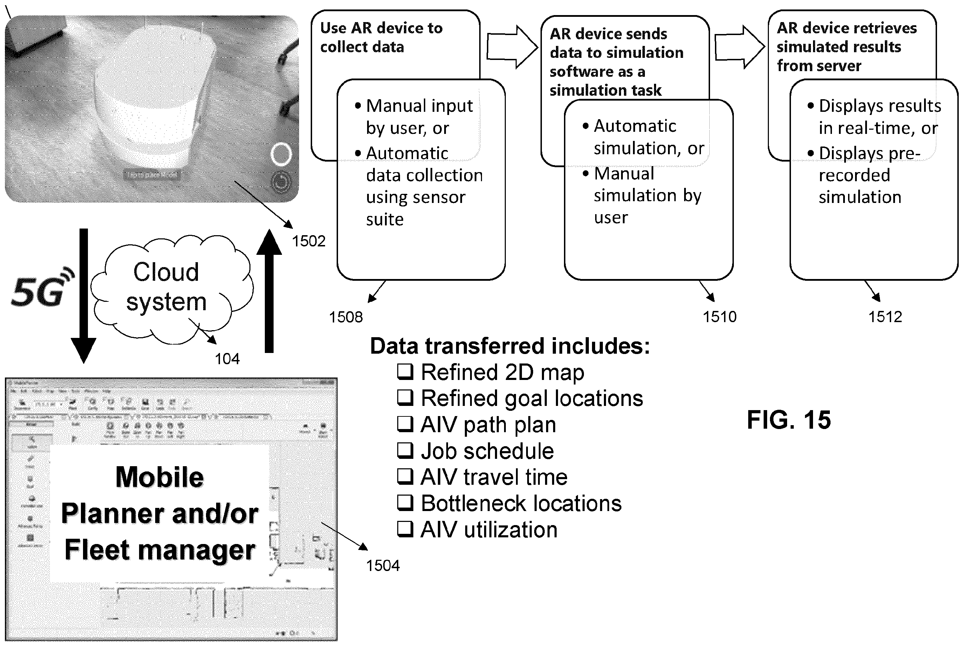

FIG. 15 shows the cloud system 104 of FIG. 1, which has the servers 108 and 110 of FIG. 1 providing the Mobile Planner and Fleet manager 1504 respectively. FIG. 15 shows a screen view 1502 of a simulation of a virtual mobile robot shown in a display of the apparatus 102 of FIG. 1. This screen view 1502 is provided by the graphical user interface 105 of FIG. 1. In the example of FIG. 15, the key feature being illustrated is that the cloud system 104 communicates with the apparatus 102 via a 5G network. The 5G network helps to reduce latency during data communication and also provides more reliable and error-free data communication. Smoother simulation can be provided if a 5G network is used. The apparatus 102 can also be known as an Augmented Reality (AR) device that is used to collect data at an environment of a work site. When the 5G network is used, 3 key steps 1508, 1510 and 1512 are involved.

In the step 1508, the AR device is used to collect data. In this step, a user can manually input the data to be collected on the AR device and/or let the AR device automatically collect data using the one or more sensors 109 of FIG. 1 (sensor suite). If automatic data collection is activated for the AR device, a user may have to carry the AR device and follow the movements of the virtual mobile robot so as to perform localization for the virtual mobile robot via the sensor suite of the AR device. However, it is also possible for the user not to move the AR device along with the virtual mobile robot and to let the virtual mobile robot automatically explore a given or existing map that is updated with static and/or dynamic objects by other AR devices, other equipment used to monitor objects in the map, and/or real mobile robots present in the environment.

In the step 1510, the AR device sends the data collected in step 1508 via the 5G network to a simulation software (which can be the Fleet Manager or another software) as a simulation task. In this example, the simulation software is run on the simulation server 110 of FIG. 1. Simulation is then automated and data for displaying the simulation is transmitted to the AR device for display. Automated simulation refers to the case in which the virtual mobile robot is set to autonomously navigate on its own (e.g. step 214 in FIG. 2). A user can also select to manually simulate and this means the user drives the virtual mobile robot (e.g. step 222 in FIG. 2) around to collect data, instead of setting the virtual mobile robot to autonomously navigate on its own to collect data. The collected data that is transferred to the simulation software can include a refined 2D map, refined goal locations, Autonomous Intelligent Vehicle (AIV) path plan (AIV refers to the virtual mobile robot; the path plan can be local path plan or global path plan), job schedule for the AIV, AIV travel time, Bottleneck locations (e.g. location with a heavy traffic condition, location with a difficulty to avoid (i.e. get around) an object, location with slowness or inefficiency in job performance, etc.), and AIV utilization (i.e. usage statistics of the AIV).

In the step 1512, the AR device retrieves the simulated results from the simulation server 110 via the 5G network. The simulated results can be displayed in real-time on the display of the AR device. Alternatively, the simulated results can be recorded and a user can view the pre-recorded simulation on the display of the AR device at a later time to learn the demonstration provided by the simulation, and/or to study the simulation and provide improvements.

With the help of the 5G network and software such as the Fleet Manager, the AR device can be used to smoothly visualize not just one virtual mobile robot but a plurality of virtual and/or real mobile robots operating in the environment of a work site. Each apparatus controlling one or more virtual mobile robots and/or each real mobile robot working in the environment can be configured to communicate data about itself with the server running the Fleet manager (e.g. 110 of FIG. 1). The Fleet manager acts as a central traffic controller and provides data to each AR device to instruct the AR device to show the graphics simulating traffic conditions in the environment. In this manner, one or more virtual and/or real mobile robots appearing in a field-of-view of the AR device can be visualized as part of the environment with input from the Fleet manager, and all visualized virtual mobile robots in the environment operate as if the virtual mobile robots are real objects in the simulation.

An example of the apparatus (e.g. apparatus 102) described in examples of the present disclosure or any one of the servers described with reference to FIG. 1 may have the following components in electronic communication via a bus:
1. a display;
2. non-volatile memory and/or non-transitory computer readable medium;
3. random access memory ("RAM");
4. N number of processing components (i.e. "one or more controllers", "one or more processors" or "one or more central processing units");
5. a transceiver component that includes N number of transceivers for Internet/Intranet use, and/or Wireless Network communications;
6. user controls i.e. user input devices;
7. image capturing components such as a camera (item 7 is optional for the servers described with reference to FIG. 1);
8. optionally, audio signal capturing components (e.g. microphone);
9. optionally, audio speakers;
10. one or more sensors and/or components for navigation/area mapping purposes (item 10 is optional for the servers described with reference to FIG. 1); and
11. Input/Output interfaces for connecting to the user input devices (such as mouse, joystick, keyboard, sensors for detecting user gestures, and the like), the audio speakers, display, the image capturing components and/or the audio signal capturing components.

The display generally operates to provide a presentation of graphical content (e.g. the graphical user interface 105 of FIG. 1) to a user, and may be realized by any of a variety of displays (e.g., CRT, LCD, HDMI, micro-projector and OLED displays). The display may be a touchscreen and in this case, the touchscreen is part of the user controls i.e. user input devices.

In general, the non-volatile memory functions to store (e.g., persistently store) data and executable code including code that is associated with the functional components of the mobile platform. In some cases, for example, the non-volatile memory includes bootloader code, modem software, operating system code, file system code, as well as other codes well known to those of ordinary skill in the art that are not depicted for simplicity.

In many implementations, the non-volatile memory is realized by flash memory (e.g., NAND or NOR memory), but it is certainly contemplated that other memory types may be utilized as well. Although it may be possible to execute the code from the non-volatile memory, the executable code in the non-volatile memory is typically loaded into RAM and executed by one or more of the N processing components.

One or more computer programs may be stored on any machine or computer readable medium that may be non-transitory in nature. The computer readable medium may include storage devices such as magnetic or optical disks, memory chips, or other storage devices suitable for interfacing with the mobile platform. The machine or computer readable medium may also include a hard-wired medium such as exemplified in the Internet system, or wireless medium such as exemplified in the Wireless LAN (WLAN) system.

The N processing components (or "one or more processors") in connection with RAM generally operate to execute the instructions stored in non-volatile memory to effectuate the functional components. As one skilled in the art (including ordinarily skilled) will appreciate, the N processing components may include a video processor, modem processor, DSP, graphics processing unit (GPU), and other processing components.

The transceiver component may include N transceiver chains, which may be used for communicating with external devices via wireless networks. Each of the N transceiver chains may represent a transceiver associated with a particular communication scheme. For example, each transceiver may correspond to protocols that are specific to local area networks, cellular networks (e.g. a WIFI network, a CDMA network, a GPRS network, a UMTS networks, a 5G network etc.), and other types of communication networks. In some implementations, the communication of the transceiver component with communication networks enables a location of connected devices to be determined.

The one or more sensors and/or components for navigation/area mapping purposes may be or include the image capturing components for capturing images (photograph or video). The one or more sensors may be or include laser sensors (e.g. LiDAR scanner), infrared and/or ultrasonic sensors.

In summary, examples of the present disclosure may have the following features.

An apparatus (e.g. 102 in FIG. 1) for simulating a mobile robot at a work site, wherein the apparatus comprises: one or more sensors (e.g. 109 in FIG. 1) for mapping an environment of a work site (this mapping covers the generation of a map or a partial map); and a processor configured to execute instructions to operate the apparatus to: display images of the environment captured by the one or more sensors on a display; perform mapping of the environment based on inputs of the one or more sensors; detect one or more objects (includes static and/or dynamic objects) in the environment; generate graphics of a virtual mobile robot (e.g. 402 of FIG. 4 and 5, 800 of FIG. 8, 900 of FIG. 9, 1000 of FIG. 10, 1100 of FIG. 11, and 1200 of FIG. 12 and 13) for displaying in the environment displayed on the display; and receive user input (e.g. waypoints/goals for autonomous navigation by the virtual mobile robot, manual driving signal provided through for instance a virtual joystick or movement pad, etc.) to control movements of the virtual mobile robot in the displayed environment, wherein the virtual mobile robot is configured to avoid (i.e. get around) the one or more objects detected in the environment when the virtual mobile robot is moving in the displayed environment.

The one or more objects detected in the environment may include one or more objects moveable in the environment (dynamic object).

The apparatus may be operable to: receive user input to add one or more waypoints in the displayed environment to navigate movement of the virtual mobile robot according to the one or more waypoints.

The apparatus may be operable to: set a task for the virtual mobile robot to perform at any of the one or more way points; and display graphics for simulating the performance of the task.

A map (e.g. 1402 and 1404 in FIG. 14) may be generated during the mapping of the environment, and the apparatus is operable to: send the map and information of the one or more detected objects in the map to a server (e.g. 108 and/or 110 in FIG. 2 - One or both the Mobile Planner and the Fleet manager can be configured to receive the map) for recording, wherein the server is configured to receive inputs from one or more apparatuses (e.g. any equipment with mapping/location/object detection capabilities, other apparatus similar to the present apparatus, real or virtual mobile robot, etc.) present in the environment to update the map and/or the information of the one or more detected objects in the map, so that the apparatus is able to use the updated map and/or updated the information of the one or more objects in the map.

The map may be a three-dimensional map (e.g. 1402 in FIG. 14) and the apparatus is operable to: convert the three-dimensional map into a two-dimensional map (e.g. 1404 in FIG. 14) and the two-dimensional map is sent to the server.

The apparatus may be operable to: send data of one or more movement paths (e.g. local path plan) determined by the virtual mobile robot to the server.

The apparatus may be operable to: send data to a server (e.g. 110 in FIG. 1) to process data for displaying the simulation of the operation of the virtual mobile robot, wherein the server is configured to receive location data of the apparatus and one or more other apparatuses operating in the environment, and to control traffic in the environment based on the received location data; and receive data streamed from the server for displaying the simulation of the virtual mobile robot on the display through a 5G network in real-time, wherein the simulation of the operation of the virtual mobile robot considers traffic conditions of the apparatus and the one or more other apparatuses in the environment such that collision between the apparatus and the one or more other apparatuses is prevented.

The apparatus may be operable to: process captured images of the environment directed to ground in the environment during an initialization step; display a graphical indication (e.g. 304 in FIG. 3) on the ground shown in the display; and display the graphics of the virtual mobile robot after the initialization step is completed.

The apparatus may be operable to: receive user input to select one or more zones that the virtual mobile robot is allowed to enter and/or zones that the virtual mobile robot is not allowed to enter in the displayed environment.

The apparatus may be operable to: receive user input to select a payload (e.g. 602 and 604 in FIG. 6, 702 and 704 in FIG. 7, 1004 in FIG. 10, and 1204 in FIG. 12) with a specific function in the work site to be mounted on the virtual mobile robot to enable simulation of the virtual mobile robot with the mounted payload.

The payload may be a mobile manipulator that supports robot kinematics of 6 or more axes, and the mobile manipulator is configurable to simulate performance of one or more production tasks.

The apparatus may be operable to: calculate work cycle time of the virtual mobile robot and/or utilization information of the virtual mobile robot based on simulation of the operation of the virtual mobile robot.

The apparatus may be operable to: receive user input to set one or more path planning parameters for the virtual mobile robot, wherein the one or more movement parameters include one or more of the following:
movement speed and maximum movement speed of the virtual mobile robot;
rotation speed and maximum rotation speed of the virtual mobile robot;
turning radius of the virtual mobile robot;
acceleration/deceleration of the virtual mobile robot;
clearance between the virtual mobile robot and objects in the environment; and
resistance level of the virtual mobile robot to enter or cross a line or area, and/or preference level of the virtual mobile robot to enter or cross a line or area.

More than one of the virtual mobile robot may be generated (e.g. upon user request or by the Fleet Manager to simulate traffic condition) to move in the displayed environment, and each virtual mobile robot may consider one another as an object to avoid.

The apparatus may be operable to: display graphics for one or more features that are invisible to human eye, wherein the one or more features include one or more of the following:
field of view of lasers projected by the virtual mobile robot and/or other detected object with ability to emit laser in the work site; and
radiation emitted from a radiation emitting source,
wherein the virtual mobile robot is configurable to avoid these one or more features during movement.

The apparatus may be operable to: enable gathering of information relating to mapping (for full map or partial map creation), navigation (e.g. localization data, local/global path plans auto-computed by the virtual mobile robot, etc.) and/or operation (e.g. cycle time, utilization time, traffic condition, other work efficiency related parameter, etc.) of the virtual mobile robot by setting the virtual mobile robot to autonomously navigate in the environment, or enable gathering of information relating to mapping, navigation and/or operation of the virtual mobile robot by a user providing input to drive the virtual mobile robot to move in the environment.

The apparatus may be a hand-held mobile device.

A method (e.g. 200 in FIG. 2) for simulating a mobile robot at a work site, wherein the method comprises: displaying images of an environment of a work site captured by one or more sensors (e.g. 109 in FIG. 1) on a display; performing mapping of the environment based on inputs of the one or more sensors; detecting one or more objects in the environment; generating graphics of a virtual mobile robot (e.g. 402 of FIG. 4 and 5, 800 of FIG. 8, 900 of FIG. 9, 1000 of FIG. 10, 1100 of FIG. 11, and 1200 of FIG. 12 and 13) for displaying in the environment displayed on the display; and receiving user input to control movements of the virtual mobile robot in the displayed environment, wherein the virtual mobile robot is configured to to avoid the one or more objects detected in the environment when the virtual mobile robot is moving in the displayed environment.

A system (e.g. 100 in FIG. 1) for simulating a mobile robot at a work site, wherein the system comprises: the apparatus (e.g. 102 in FIG. 1) as described above in this summary; and a cloud system (e.g. 104 in FIG. 1) comprising any of the server (e.g. 108 and/or 110 in FIG. 2) as described above in this summary.

In the specification and claims, unless the context clearly indicates otherwise, the term "comprising" has the non-exclusive meaning of the word, in the sense of "including at least" rather than the exclusive meaning in the sense of "consisting only of'. The same applies with corresponding grammatical changes to other forms of the word such as "comprise", "comprises" and so on.

While the invention has been described in the present disclosure in connection with a number of examples and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus for simulating a mobile robot at a work site, wherein the apparatus comprises:
one or more sensors for mapping an environment of a work site; and
a processor configured to execute instructions to operate the apparatus to:
display images of the environment captured by the one or more sensors on a display;
perform mapping of the environment based on inputs of the one or more sensors;
detect one or more objects in the environment;
generate graphics of a virtual mobile robot for displaying in the environment displayed on the display; and
receive user input to control movements of the virtual mobile robot in the displayed environment,
wherein the virtual mobile robot is configured to avoid the one or more objects detected in the environment when the virtual mobile robot is moving in the displayed environment.

2. The apparatus as claimed in claim 1, wherein the one or more objects detected in the environment include one or more objects moveable in the environment.

3. The apparatus as claimed in claim 1 or 2, wherein the apparatus is operable to:
receive user input to add one or more waypoints in the displayed environment to navigate movement of the virtual mobile robot according to the one or more waypoints.

4. The apparatus as claimed in claim 3, wherein the apparatus is operable to:
set a task for the virtual mobile robot to perform at any of the one or more way points; and
display graphics for simulating the performance of the task.

5. The apparatus as claimed in claim 4, wherein a map may be generated during the mapping of the environment, and the apparatus is operable to:
send the map and information of the one or more detected objects in the map to a server for recording, wherein the server is configured to receive inputs from one or more apparatuses present in the environment to update the map and/or the information of the one or more detected objects in the map, so that the apparatus is able to use the updated map and/or updated the information of the one or more objects in the map.

6. The apparatus as claimed in claim 5, wherein the map is a three-dimensional map and the apparatus is operable to:
convert the three-dimensional map into a two-dimensional map and the two-dimensional map is sent to the server.

7. The apparatus as claimed in claim 5 or 6, wherein the apparatus is operable to:
send data of one or more movement paths determined by the virtual mobile robot to the server.

8. The apparatus as claimed in any one of claims 1 to 7, wherein the apparatus is operable to:
send data, including location data, to a server to process data for displaying the simulation of the operation of the virtual mobile robot, wherein the server is configured to receive location data of the apparatus and one or more other apparatuses operating in the environment, and to control traffic in the environment based on the received location data; and
receive data streamed from the server for displaying the simulation of the virtual mobile robot on the display through a 5G network in real-time, wherein the data streamed from the server includes traffic conditions of the apparatus and the one or more other apparatus, and the simulation of the operation of the virtual mobile robot takes into consideration the traffic conditions such that collision between the apparatus and the one or more other apparatuses is prevented.

9. The apparatus as claimed in any one of claims 1 to 8, wherein the apparatus is operable to:
process captured images of the environment directed to ground in the environment during an initialization step;
display a graphical indication on the ground shown in the display; and
display the graphics of the virtual mobile robot after the initialization step is completed.

10. The apparatus as claimed in any one of claims 1 to 9, wherein the apparatus is operable to:
receive user input to select one or more zones that the virtual mobile robot is allowed to enter and/or zones that the virtual mobile robot is not allowed to enter in the displayed environment.

11. The apparatus as claimed in any one of claims 1 to 10, wherein the apparatus is operable to:
receive user input to select a payload with a specific function in the work site to be mounted on the virtual mobile robot to enable simulation of the virtual mobile robot with the mounted payload.

12. The apparatus as claimed in claim 11, wherein the payload is a mobile manipulator that supports robot kinematics of 6 or more axes, and the mobile manipulator is configurable to simulate performance of one or more production tasks.

13. The apparatus as claimed in any one of claims 1 to 12, wherein the apparatus is operable to:
calculate work cycle time of the virtual mobile robot and/or utilization information of the virtual mobile robot based on simulation of the operation of the virtual mobile robot.

14. The apparatus as claimed in any one of claims 1 to 13, wherein the apparatus is operable to:
receive user input to set one or more movement parameters for the virtual mobile robot, wherein the one or more movement parameters include one or more of the following:
movement speed and maximum movement speed of the virtual mobile robot;
rotation speed and maximum rotation speed of the virtual mobile robot;
turning radius of the virtual mobile robot;
acceleration/deceleration of the virtual mobile robot;
clearance between the virtual mobile robot and objects in the environment; and
resistance level of the virtual mobile robot to enter or cross a line or area, and/or preference level of the virtual mobile robot to enter or cross a line or area.

15. The apparatus as claimed in any one of claims 1 to 14, wherein more than one of the virtual mobile robot is generated to move in the displayed environment, and each virtual mobile robot considers one another as an object to avoid.

16. The apparatus as claimed in any one of claims 1 to 15, wherein the apparatus is operable to:
display graphics for one or more features that are invisible to human eye, wherein the one or more features include one or more of the following:
field of view of lasers projected by the virtual mobile robot and/or other detected object with ability to emit laser in the work site; and
radiation emitted from a radiation emitting source, wherein the virtual mobile robot is configurable to avoid these one or more features during movement.

17. The apparatus as claimed in any one of claims 1 to 16, wherein the apparatus is operable to:
enable gathering of information relating to mapping, navigation and/or operation of the virtual mobile robot by setting the virtual mobile robot to autonomously navigate in the environment, or
enable gathering of information relating to mapping, navigation and/or operation of the virtual mobile robot by a user providing input to drive the virtual mobile robot to move in the environment.

18. The apparatus as claimed in any one of claims 1 to 17, wherein the apparatus is a hand-held mobile device.

19. A method for simulating a mobile robot at a work site, wherein the method comprises:
displaying images of an environment of a work site captured by one or more sensors on a display;
performing mapping of the environment based on inputs of the one or more sensors;
detecting one or more objects in the environment;
generating graphics of a virtual mobile robot for displaying in the environment displayed on the display; and
receiving user input to control movements of the virtual mobile robot in the displayed environment,
wherein the virtual mobile robot is configured to move in the displayed environment to overcome the one or more objects detected in the environment.

20. A system for simulating a mobile robot at a work site, wherein the system comprises:
the apparatus as claimed in any one of claims 1 to 18; and a cloud system comprising the server as claimed in any one of claims 5 to 8.
